# EUROPEAN PATENT SPECIFICATION

(11) **EP 2 783 107 B1**
(45) Date of publication and mention of the grant of the patent: **03.10.2018**
(21) Application number: 12787440.2
(22) Date of filing: 15.11.2012
(51) Int. Cl.: F03D 7/02, F03D 7/04, F03D 80/00, F03D 1/06, F03D 3/06

(54) **A WIND TURBINE BLADE**
WINDTURBINENSCHAUFEL
PALE DE TURBINE D'ÉOLIENNE

(30) Priority: 23.11.2011 EP 11190374
(43) Date of publication of application: 01.10.2014
(73) Proprietor: LM Wind Power International Technology II ApS, 6000 Kolding (DK)
(72) Inventor: SINGH, Ashish, Bangalore 560043 (IN)
(74) Representative: Kitchen, Steven Richard
(86) International application number: PCT/EP2012/072768
(87) International publication number: WO 2013/076008

(56) References cited:
- EP-A1- 1 780 408
- EP-A2- 1 674 723
- WO-A1-2009/025548
- WO-A1-2009/025549
- US-A1- 2011 142 666

## Description

### Field of the Invention

The present invention relates to a wind turbine blade having noise reduction features.

### Background of the Invention

One of the primary considerations in the design and operation of wind turbines is the noise levels produced during operation of the wind turbine. Particularly in the case of on-shore wind turbines which may be located close to inhabited areas, the noise from wind turbines can be a limiting factor during the planning permission process when considering possible wind turbine locations. Accordingly, it is of interest to provide for wind turbine designs having reduced noise output during operation.

A large portion of the noise produced during wind turbine operation is due to turbulence formed at the trailing edge of a wind turbine blade, as the relatively faster suction-side airflow meets with the relatively slower pres-sure-side airflow. The relatively high level of turbulent kinetic energy in the combined airflows results in a turbulent scattering of airflow at the trailing edge, which produces scattering noise.

It is known to provide fixed serrations or bristles at the trailing edge of a wind turbine blade in order to disrupt the trailing edge airflow, thereby damping or reducing the turbulence formed at the trailing edge, and consequently the associated noise levels. Examples of trailing edge serrations can be seen in US Patent Publication No. US 2011/0142666 A1. Examples of trailing edge bristles can be seen in US Patent Publication No. US 2008/0166241 A1.

Other examples of blades with noise reduction features are disclosed in EP 1 674 723 A2 and WO 2009/025549 A1.

However, such noise-reducing features do not provide a complete elimination of trailing edge noise during blade operation.

It is an object of the invention to provide a wind turbine blade having improved noise-reducing characteristics over the known blade designs.

### Summary of the Invention

Accordingly, there is provided a wind turbine blade for a rotor of a wind turbine having a substantially horizontal rotor shaft, the rotor comprising a hub, from which the wind turbine blade extends substantially in a radial direction when mounted to the hub, the wind turbine blade extending in a longitudinal direction parallel to a longitudinal axis and having a tip end and a root end,
the wind turbine blade comprising a profiled contour including a pressure side and a suction side, as well as a leading edge and a trailing edge with a chord having a chord length extending therebetween, the profiled contour, when being impacted by an incident airflow, generating a lift,
wherein the wind turbine blade further comprises at least a first array of projecting flow modulation elements provided at the trailing edge of the contour, said flow modulation elements projecting in a direction substantially away from the leading edge of the contour, said elements operable to reduce noise generated by operation of the blade by modulation of the airflow at the trailing edge of the contour,
wherein the wind turbine blade further comprises at least one fluid injection device, the fluid injection device operable to inject fluid into the airflow over the blade contour to reduce the turbulent kinetic energy of airflow at the trailing edge of the profiled contour, to further reduce the noise generated by operation of the blade, wherein the the fluid injection device comprises a nozzle operable to inject fluid in the form of spray or droplets into the airflow over the blade.

The projecting modulation elements act to provide a pressure release mechanism between the suction and pressure sides of the airfoil, to reduce the scattering effect of the turbulent airflow at the trailing edge. The fluid injection acts to dampen the kinetic energy of the turbulent airflow over the contour. The invention may also reduce trailing edge noise for blunt trailing edges of the contour. When the noise modulation effect of the projecting modulation elements is combined with the energy dampening effect of the fluid injection, the synergistic effect of the two separate noise reducing features working in tandem acts to provide a considerable reduction in noise produced during operation of such a wind turbine blade in an incident airflow. The at least one fluid injection device is preferably provided at a location at or adjacent the trailing edge of the profiled contour of the blade.

Preferably, said at least one fluid injection device is provided on said profiled blade contour at between 90-100% of the chordal distance from the leading edge of the blade.

The fluid injection device may be located at the trailing edge itself, or may be located on the airfoil profile just before the trailing edge.

Preferably, the fluid is selected to have a higher viscosity than the incident airflow.

Mixing a relatively high viscosity fluid with the relatively low viscosity airflow about the blade acts to efficiently dampen the turbulent energy present in the incident airflow, thereby reducing the noise level generated by the scattering effect of the airflow at the trailing edge of the blade.

Preferably, the fluid is water. The fluid may alternatively comprise a suitable aerosol.

An aerosol is suspension of fine solid particles or liquid particles in gas. In one embodiment, the aerosol may comprise water particles mixed with a gas. In an alternative embodiment, the aerosol may comprise micro sized dust particles in a gas. In one embodiment, the aerosol may comprise sea salt mixed with gas.

By injecting the fluid as a spray, a faster mixing of the airflow and the fluid will occur, acting to quickly absorb the turbulent kinetic energy of the airflow, and thereby providing a fast reduction of the trailing edge noise of the blade.

Injecting the fluid as a jet of droplets provides for a greater absorption of turbulent kinetic energy from the airflow, but which is balanced with a relatively longer kinetic energy absorption time.

Preferably, said at least a first array of projecting flow modulation elements extends in a longitudinal direction along at least a portion of the length of the wind turbine blade between said root end and said tip end.

The array is provided substantially at the trailing edge of the blade, along a portion of the length of the blade. Preferably, the array is at least provided towards the distal end of the blade, towards the blade tip end. Preferably, the array is at least substantially provided in the region of 60-90% of the length of the blade from the root end of the blade.

As the majority of the noise-generation of a wind turbine blade occurs towards the outer section of the blade, due to the relatively high wind speeds in effect at the outer sections of the blade, the noise reducing features perform most effectively when located in these regions.

Preferably, said projecting elements comprise serrations.

The use of serrations at the trailing edge of a blade provides a modulation of noise spectra generated at the trailing edge. The serrations act to provide a pressure release mechanism between the pressure and suction side airflows over the blade, reducing the scattering noise associated with trailing edge airflow.

Additionally or alternatively, said projecting elements comprise bristles.

The use of flexible bristles at the trailing edge act to dampen the turbulent airflow at the trailing edge, converting the kinetic energy of the airflow into mechanical (bending) energy in the bristles.

Said bristles may be provided as an array of bristles extending along at least a portion of the trailing edge of the blade along the longitudinal length of said blade. Alternatively, said bristles may be provided as a plurality of clusters of bristles projecting from the trailing edge, said clusters of bristles spaced along the longitudinal length of said blade.

In one embodiment, said at least one fluid injection device is provided at said trailing edge between adjacent projecting elements.

By locating the fluid injection device between the projecting elements, an effective combination of the two noise-reducing features can be achieved, providing for an efficient and immediate reduction in the trailing edge noise of the wind turbine blade.

In the case of serrations at the trailing edge, scattering noise is normally generated due to airflow over the side edges of the serrations. Accordingly, when the fluid injection is located between adjacent serrations, the injected fluid will immediately impact on the airflow at the serration side edges. Thus, scattering noise produced at the edges of the serrations themselves will be efficiently reduced due to the fluid injection between adjacent serrations.

Similarly, in the case of an array of bristle clusters provided at the trailing edge, the fluid injection is located between adjacent clusters of bristles to efficiently dampen any noise produced in the inter-cluster area.

Additionally or alternatively, at least one fluid injection device is provided adjacent said trailing edge, to inject fluid into the airflow about the profiled contour at a location upstream of said trailing edge.

By injecting fluid into the incident airflow at a location upstream of the trailing edge, the fluid injection device is operable to sufficiently dampen or absorb the turbulent kinetic energy of the airflow before it reaches the trailing edge, thereby reducing the level of turbulence and scattering which occurs at the trailing edge, as well as the associated noise levels.

Preferably, said at least one fluid injection device is positioned at a location spaced from the trailing edge, approximately 5-10% of the chordal length from said trailing edge.

In an alternate embodiment, said at least one fluid injection device is positioned at a location spaced from the trailing edge, approximately 2-5% of the chordal length from said trailing edge.

In this case, the chordal length being calculated at that point along the length of the blade where the at least one fluid injection device is located.

Preferably, said at least one fluid injection device is operable to inject fluid into the airflow at an angle of approximately 145-170 degrees to the chord of the profiled contour of the blade, taken from the leading edge of the blade.

By injecting the fluid in a substantially downstream direction, but at an angle to the trailing edge of the blade, the fluid injection provides a good balance between effective dampening of the turbulent kinetic energy of the incident airflow, while also providing a negligible impact on the power produced by operation of the blade.

In one embodiment, said profiled contour comprises a substantially blunt trailing edge, wherein said at least a first array of projecting flow modulation elements are provided at the pressure side of said blunt trailing edge, and wherein said at least one fluid injection device is provided at the suction side of said blunt trailing edge.

In a blade having a blunt or truncated trailing edge, there is a trailing edge surface defined between the pressure side and the suction side of the blade at the blade trailing edge. In such cases, serrations or bristles may be provided at the pressure side of the trailing edge surface, so that the projecting elements do not cause any changes in the aerodynamic characteristics at the suction side (which may impact the produced power level during blade operation). Accordingly, providing the fluid injection at the suction side of the trailing edge surface acts to reduce trailing edge noise at the suction side, without substantially affecting the suction side aerodynamics (and associated generated power level). Furthermore, the use of the two noise-reducing features provides a composite reduction in overall trailing edge noise due to the combination of the modulated flow from the action of both the serrations/bristles and the fluid injection.

In a preferred embodiment, said at least a first array of projecting elements is moveable relative to the trailing edge of the blade.

A moveable array of projecting elements allows for adjustment of the noise modulation performed at the trailing edge of the blade. Preferably the array is translationally moveable relative to the trailing edge, but it will be understood that any characteristic of the array may be adjustable, e.g. the positioning, length, dimensions, etc. of the projections may be varied to provide for a variable modulation of noise spectra at the trailing edge of the blade.

In a further preferred embodiment, said at least one fluid injection device is moveable to provide an adjustable fluid injection direction.

By moving the fluid injection device, the positioning and/or the direction of fluid injection may be adjusted to provide for an adaptive dampening or absorption of turbulent kinetic energy over the profiled contour of the blade.

Preferably, the angle of fluid injection is variable from a substantially downstream direction to a substantially upstream direction.

Dependent on operating conditions, the fluid injection may be aligned in a substantially downstream direction (which provides adequate dampening or absorption of kinetic energy in the airflow while not substantially impacting on the blade aerodynamic lift characteristics), or in a substantially upstream direction (which provides for relatively increased dampening or absorption of kinetic energy in the airflow, while possibly negatively impacting on the blade lift).

In one embodiment, the blade comprises a fluid communication system operable to convey a fluid from a fluid reservoir to said at least one fluid injection device.

A quantity of fluid may be stored in a reservoir provided in the blade, or the blade may have an internal tubing system which can receive a quantity of fluid from an external source for injection at the trailing edge. The external source may be from e.g. a local water supply system, or from surrounding seawater in the case of an off shore turbine.

In one embodiment, the fluid communication system comprises at least one pump.

The blade may utilise a pumping mechanism to ensure that the correct volume of fluid is provided to the fluid injection device.

In one embodiment, the fluid communication system comprises at least one valve operable to regulate the flow of fluid to the said at least one fluid injection device.

The injection rate of the fluid may be controlled based on the operation conditions of the turbine. For example, the blade may be coupled with noise sensors operable to detect the level of acoustic noise produced by the blade during operation, wherein the rate of injection is varied in accordance with the output noise of the blade, to minimise the noise produced by the blade.

There is further provided a wind turbine having at least one wind turbine blade as described above.

There is also provided a wind turbine blade for a rotor of a wind turbine having a substantially horizontal rotor shaft, the rotor comprising a hub, from which the wind turbine blade extends substantially in a radial direction when mounted to the hub, the wind turbine blade extending in a longitudinal direction parallel to a longitudinal axis and having a tip end and a root end,
the wind turbine blade comprising a profiled contour including a pressure side and a suction side, as well as a leading edge and a trailing edge with a chord having a chord length extending therebetween, the profiled contour, when being impacted by an incident airflow, generating a lift,
wherein the wind turbine blade further comprises at least one fluid injection device provided towards said trailing edge, the fluid injection device operable to inject fluid into the airflow over the blade contour to reduce the turbulent kinetic energy of airflow, to reduce the scattering noise generated at the trailing edge of the profiled contour by operation of the blade,
wherein the at least one fluid injection device is operable to inject fluid in an upstream direction, substantially in the direction of the leading edge of the profiled contour, in a direction away from the trailing edge.

By injecting fluid in an upstream direction, i.e. in a direction substantially into the oncoming incident airflow, a considerable reduction in operational noise of the blade is produced, due to the relatively large absorption of turbulent kinetic energy from the airflow about the blade.

Preferably, said at least one fluid injection device is adjustable such that the angle of fluid injection is variable from said substantially upstream direction to a substantially downstream direction, towards the trailing edge of the profiled contour, substantially away from the leading edge.

By varying the direction of injection, the noise-reducing characteristics of the blade can be adjusted from an upstream direction, which provides a high level of noise reduction, but which may affect the blade aerodynamic lift characteristics, to a downstream direction, which provides adequate noise reduction, while negligibly impacting on the blade aerodynamic characteristics.

In one embodiment, said at least one fluid injection device is adjustable such that the fluid injection direction may be varied from a position to inject fluid into the airflow over the blade profiled contour to a position to apply fluid onto a surface of the blade profiled contour.

By having a moveable fluid injection device, fluid may be applied directly to the surface of the blade. By applying a fluid to the surface of the blade, this provides for a reduction in the drag characteristics of the blade, by reducing the skin friction drag of the blade surface.

In a further embodiment, the wind turbine blade further comprises at least a first array of projecting flow modulation elements provided at the trailing edge of the contour, said flow modulation elements projecting in a direction substantially away from the leading edge of the contour, said elements operable to reduce noise generated by operation of the blade, by modulation of the airflow at the trailing edge of the contour.

The configuration of the blade is operable to reduce operational noise of the blade, in particular trailing edge scattering noise. Blunt trailing edge noise may also be reduced.

Preferably, the blade is operable to control the rate of injection of fluid by the at least one fluid injection device.

The blade may comprise at least one valve communicatively coupled to said at least one fluid injection device, to regulate the rate of flow of fluid to the at least one fluid injection device.

By adjusting the rate or volume of fluid injected into the airflow, the noise reducing characteristics of the blade can be varied, due to the variation in the levels of turbulent kinetic energy absorbed by the fluid injection.

In one embodiment, the fluid injection device comprises a nozzle operable to inject fluid in the form of a spray into the airflow over the blade.

By injecting the fluid as a spray, a faster mixing of the airflow and the fluid will occur, acting to quickly absorb the turbulent kinetic energy of the airflow, and thereby providing a fast reduction of the trailing edge noise of the blade.

Preferably, the nozzle is operable to inject fluid in the form of a spray having a spray diversion angle from said nozzle along the longitudinal direction of the blade. Preferably, said spray diversion angle is approximately between +/- 45 degrees to the nominal spray direction of the nozzle. In this case, the nominal spray direction can be understood to be the general direction in which the spray nozzle is pointing, e.g. along the direction of the chord of the blade at the location of the nozzle, in the general direction of the blade trailing edge.

Additionally or alternatively, the fluid injection device comprises a nozzle operable to inject fluid in the form of droplets into the airflow over the blade.

Injecting the fluid as a jet of droplets may provide for a greater absorption of turbulent kinetic energy from the airflow.

Preferably, the fluid is selected to have a higher viscosity than the incident airflow.

Mixing a relatively high viscosity fluid with the relatively low viscosity airflow about the blade acts to efficiently dampen the turbulent energy present in the incident airflow, thereby reducing the noise level generated by the scattering effect of the airflow at the trailing edge of the blade.

Preferably, the fluid is water. The fluid may alternatively comprise a suitable aerosol.

By an upstream direction, it is meant that the fluid is injected in a direction substantially towards the leading edge of the blade, substantially away from the trailing edge, i.e. in a direction substantially opposed to the direction of the incident airflow at the blade. By a downstream direction, it is meant that the fluid is injected in a direction substantially towards the trailing edge of the blade, substantially away from the leading edge, i.e. in a direction substantially in line with the direction of the incident airflow at the blade.

As the noise produced during wind turbine operation, relative to an observer standing on the ground, is highest when the wind turbine blade is on the downward path of the rotational cycle, the upstream injection provides the most benefit in terms of noise reduction during this stage of rotation, due to the potentially higher levels of noise reduction which can be achieved, relative to the ground-based observer. As the lift-generating characteristics of the blade are less crucial during the downward path of the blade, any impact which upstream injection makes on the blade lifting force is of lesser concern during this stage of the rotational cycle. Conversely, downstream injection is selected for the upward path of the rotational cycle, to provide some noise reduction, while also ensuring minimum impact on the lift-generating characteristics of the blade.

It will be understood that the upstream fluid injection may occur for only a portion of the downward path of the rotational cycle, e.g. when the blade is travelling in a downwards direction, between 30-120 degrees with respect to the vertical axis of the wind turbine.

There is also provided a wind turbine having at least one wind turbine blade as described above.

### Description of the Invention

Embodiments of the invention will now be described, by way of example only, with reference to the accompanying drawings, in which:
Fig. 1 shows a wind turbine;
Fig. 2 shows a schematic view of a wind turbine blade according to the invention;
Fig. 3 shows a schematic view of an airfoil profile of the blade of Fig. 2;
Fig. 4 shows a cross-sectional perspective view of a portion of the blade of Fig. 2;
Fig. 5 shows an enlarged cross-sectional view of the trailing edge of a blade according to a first embodiment of the invention;
Fig. 6 shows an enlarged cross-sectional view of the trailing edge of a blade according to a second embodiment of the invention;
Fig. 7 shows an enlarged perspective view of the trailing edge of a blade according to a third embodiment of the invention;
Fig. 8 shows a sample plot of output noise from an airfoil of a wind turbine blade during operation for two different levels of airflow turbulent kinetic energy;
Fig. 9 shows a sample distribution of output noise from a wind turbine blade against the rotational path of the wind turbine blade; and
Fig. 10 shows a pair of enlarged cross-sectional views of the trailing edge of a blade according to a further aspect of the invention.

Common elements between the different embodiments will be referred to using the same reference numerals.

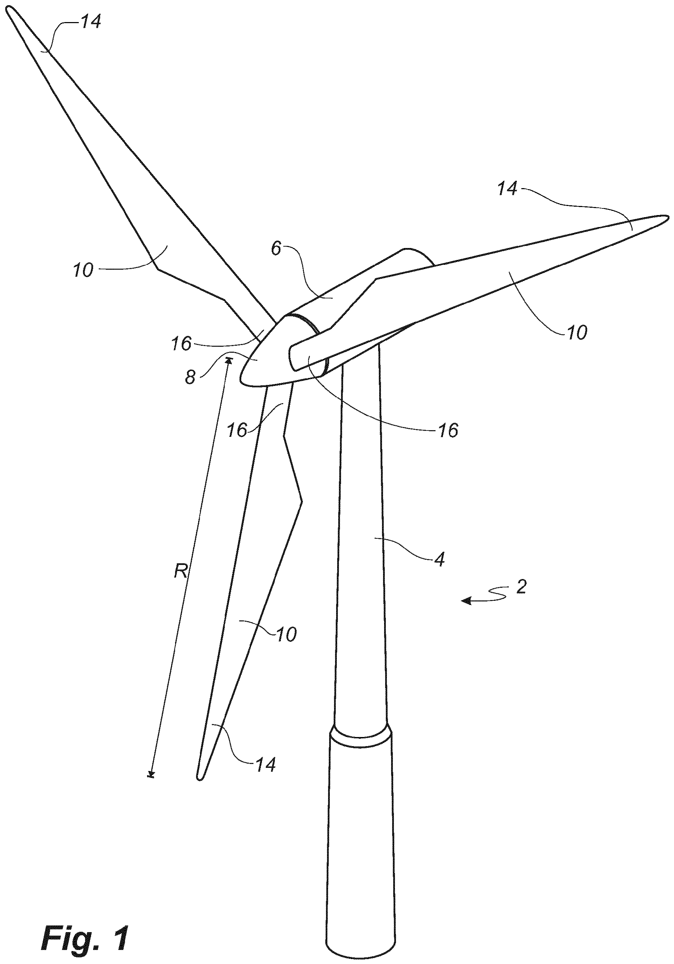

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R.

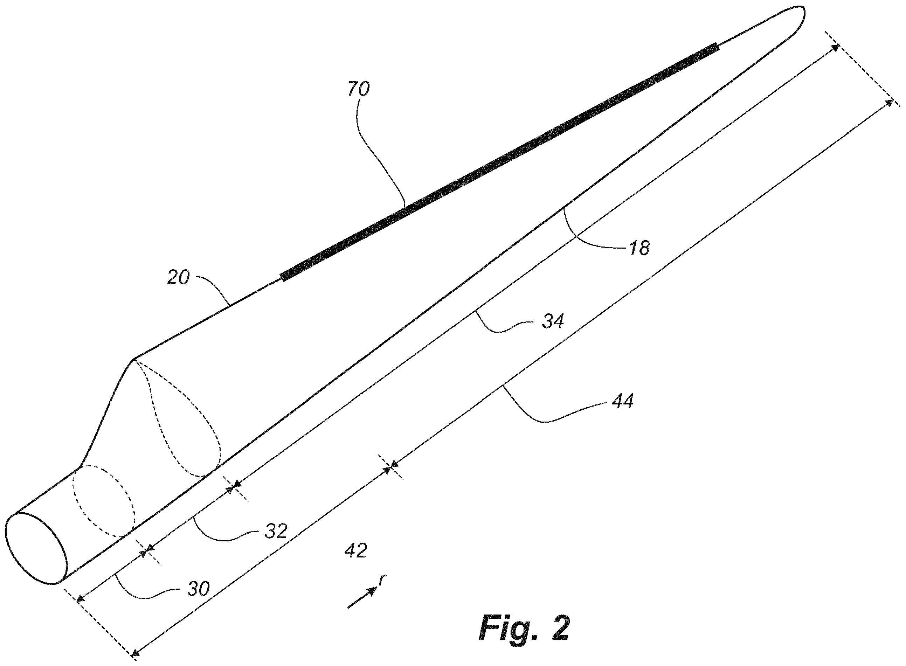

Fig. 2 shows a schematic view of a first embodiment of a wind turbine blade 10 according to an embodiment of the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 is typically constant along the entire root area 30. The transition region 32 has a transitional profile 42 gradually changing from the circular or elliptical shape 40 of the root region 30 to the airfoil profile 50 of the airfoil region 34. The chord length of the transition region 32 typically increases substantially linearly with increasing distance r from the hub.

The airfoil region 34 has an airfoil profile 50 with a chord extending between the leading edge 18 and the trailing edge 20 of the blade 10. The width of the chord decreases with increasing distance r from the hub.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

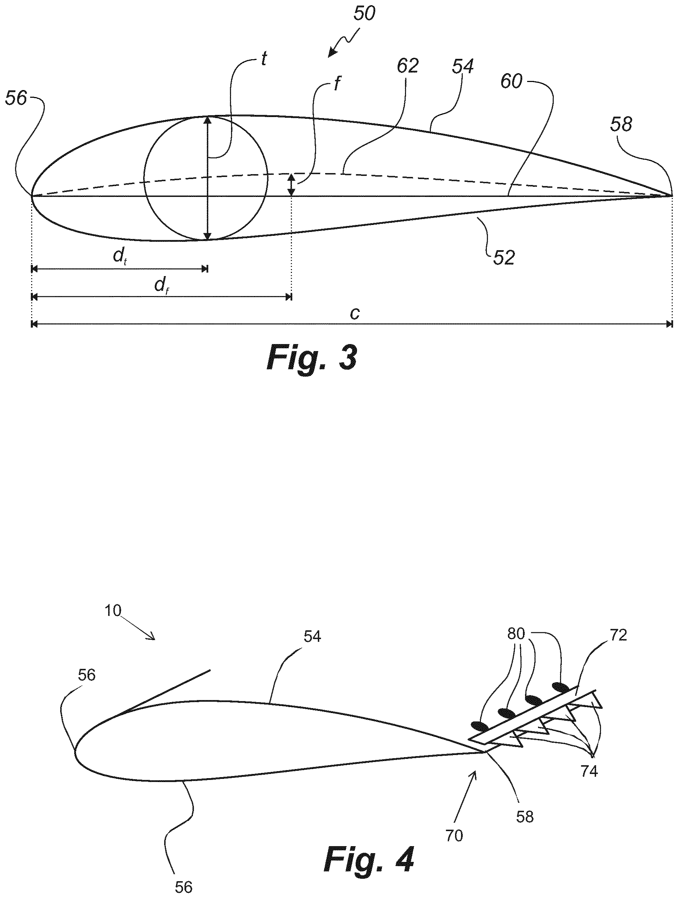

Fig. 3 shows a schematic view of an airfoil profile 50 of a typical blade of a wind turbine depicted with the various parameters, which are typically used to define the geo-metrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber and lower camber, which are defined as the distances from the chord 60 and the suction side 54 and pressure side 52, respectively.

Airfoil profiles are often characterised by the following parameters: the chord length c, the maximum camber f, the position df of the maximum camber f, the maximum airfoil thickness t, which is the largest diameter of the inscribed circles along the median camber line 62, the position dt of the maximum thickness t, and a nose radius (not shown). These parameters are typically defined as ratios to the chord length c.

With reference to Fig. 4, an enlarged view of a portion of the wind turbine blade 10 of Fig. 2 is shown, with reference to the elements of the airfoil 50 shown in Fig. 3. The blade 10 further comprises a flow modulation array 70 provided at the trailing edge 58 of the blade 10. The array 70 comprises a base plate 72 which extends along a portion of the blade trailing edge 58 and a plurality of serrations 74 which project from the base plate 72. The serrations 74 substantially project in a direction away from the leading edge 56 of the blade 10, substantially in line with the mean flow direction at the trailing edge 58 of the blade 10.

The serrations 74 act as flow modulation elements, to modulate a boundary layer airflow at the trailing edge of the wind turbine blade, in order to mitigate, frequency shift, or eliminate scattering noise generated at the trailing edge 58 of the wind turbine blade 10.

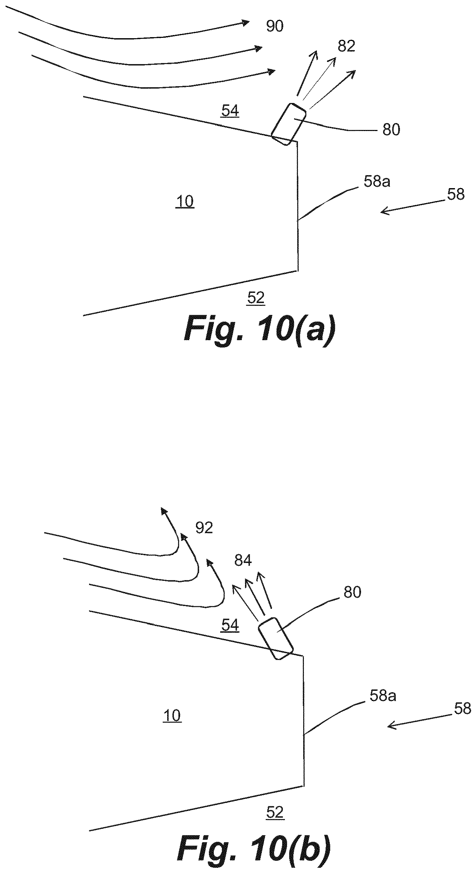

Additionally or alternatively, the serrations 74 may also have noise reduction tendencies for blunt trailing edge noise. Blunt trailing edge noise is generated due to finite tailing edge thickness (indicated at 58 in Fig. 10(a)), which basically generates Von-Karman types of vortex modulation behind the trailing edge. Presence of serrations may affect these modulations since, in the absence of serrations, vortices patterns behind trailing edge is mainly due to difference in pressure from suction and pressure side.

The array 70 is provided over at least a portion of the trailing edge 58 of the blade 50, preferably in or around the section of the blade 10 along the outer 40-98% length of the blade 10 from the root end 16 of the blade 10. In an alternate range, the array is provided along the outer 60-95% of the length of the blade.

The blade 10 further comprises a plurality of fluid injection devices 80 provided at the trailing edge 58 on the suction side 54 of the blade 10. These devices 80, in the form of e.g. liquid nozzles, spray nozzles, spouts, are operable to inject a fluid into the airflow over the wind turbine blade. The injection of fluid into the airflow over the blade 10 acts to absorb some of the turbulent kinetic energy present in the airflow - effectively damping the turbulence effect which is seen at the blade trailing edge 58. By absorbing some of the energy from the airflow, the level of scattering which occurs at the serrated trailing edge 58 is reduced even further, consequently the trailing edge noise is significantly reduced during blade operation, in particular the trailing edge scattering noise.

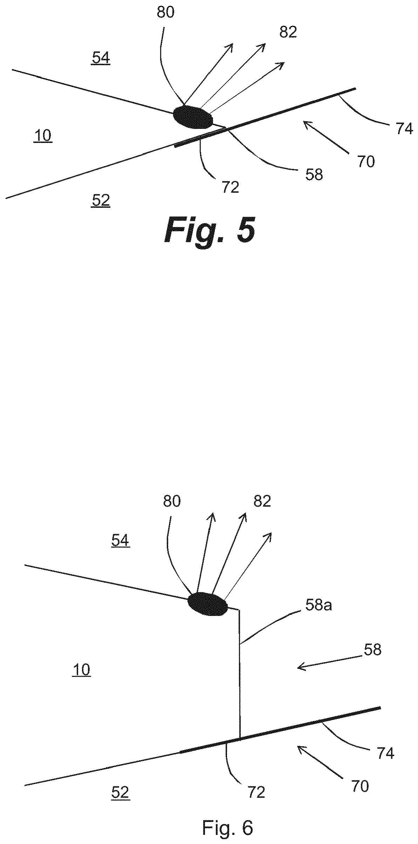

With reference to Fig. 5, an enlarged cross-sectional view of a blade trailing edge according to an embodiment of the invention is illustrated. In Fig. 5, the serrations 74 project from the blade trailing edge 58, from a base plate 72 section of the serrated array 70 attached to the blade body at the pressure side 52 of the trailing edge 58. The fluid injection devices 80 are provided at the suction side 54 of the trailing edge 58, and inject fluid into the incident airflow over the blade 10 at the trailing edge 58, as indicated by arrows 82. The use of the fluid injection devices 80 acts to reduce the turbulent kinetic energy in the airflow over the blade 10, and thereby improve the effectiveness of the serrated section 70 of the blade 10 to reduce noise at the blade trailing edge 58.

It will be understood that while the fluid injection device 80 of Fig. 5 is provided at the trailing edge 58 of the blade 10, the device may alternatively be provided on the surface of the blade 10, spaced a distance from the trailing edge 58. An advantage of the spaced arrangement is that the fluid injection occurs upstream of the trailing edge, and therefore has increased time to reduce the turbulent kinetic energy of the airflow before the airflow reaches the serrated trailing edge. Accordingly, the noise reducing performance of both the fluid injection devices 80 and the serrations 74 is maximised.

In one embodiment, the fluid injection device 80 is positioned at a location spaced from the trailing edge equivalent to approximately 5-10% of the chordal length (i.e. the length of the chord at that position along the longitudinal length of the blade) from said trailing edge 58.

It will further be understood that while the fluid injection device 80 of Fig. 5 is provided on the suction side 54 of the blade 10, it may additionally or alternatively be provided on the pressure side 52 of the blade 10.

Preferably, said at least one fluid injection device is operable to inject fluid into the airflow at an elevation angle of approximately 10 degrees to the adjacent surface of the contoured blade profile, and/or at an elevation angle of approximately 145-170 degrees to the chord of the profiled contour of the blade, taken from the leading edge of the blade. Additionally or alternatively, the at least one fluid injection device is operable to inject fluid into the airflow having an injection distribution angle measured along the longitudinal length of the blade. Preferably, such an injection distribution angle is between +/- 45 degrees to the nominal injection direction (i.e. from the injection device towards the trailing edge direction), but different angles may be chosen based on the distribution of adjacent injection devices. E.g. injection devices which are closely arranged may have a relatively smaller injection distribution angle, while devices having a relatively larger inter-device distance may have a relatively larger injection distribution angle.

With reference to Fig. 6, an enlarged cross-sectional view of a blade trailing edge according to a further embodiment of the invention is illustrated. In Fig. 6, the wind turbine blade has a blunt or truncated trailing edge 58, having a trailing edge surface 58a. In such a blade 10, the serrated array 70 is provided at the pressure side 52 of the trailing edge, to avoid any negative impact on the aerodynamic characteristics at the suction side 54 of the blade, which affects the produced power. However, as scattering noise is generated from both sides 52,54 of the blade trailing edge, fluid injection devices 80 are provided at the suction side 54 of the trailing edge 58. Accordingly, the combined action of the serrations 74 on the pressure side of the blunt trailing edge 58 and the fluid injection device 80 on the suction side 54 of the blunt trailing edge 58 act to efficiently reduce noise produced from either ends of the trailing edge surface 58a, without negatively impacting on the blade lift characteristics (and associated power production).

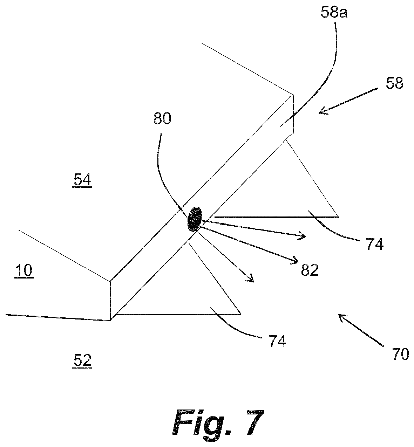

With reference to Fig. 7, an enlarged perspective view of a blade trailing edge according to a further embodiment of the invention is illustrated. In this embodiment, the fluid injection devices 80 (only one of which is illustrated in the section shown in Fig. 7) are positioned between adjacent serrations 74 at the blade trailing edge 58 (in this case, on the trailing edge surface 58a). The use of serrations 74 at the trailing edge 58 of a blade 10 will sometimes introduce high frequency noise caused by the turbulent scattering at the side edges of the serrations 74 themselves. By locating the fluid injection devices 80 between adjacent serrations 74, fluid 82 injected by the devices 80 is concentrated in the areas between adjacent serrations 74. Accordingly, the noise-reducing properties of the injection devices 80 are focused on reducing the highfrequency noise produced as a result of using serrations 74, providing improved noise-reducing characteristics for the blade 10.

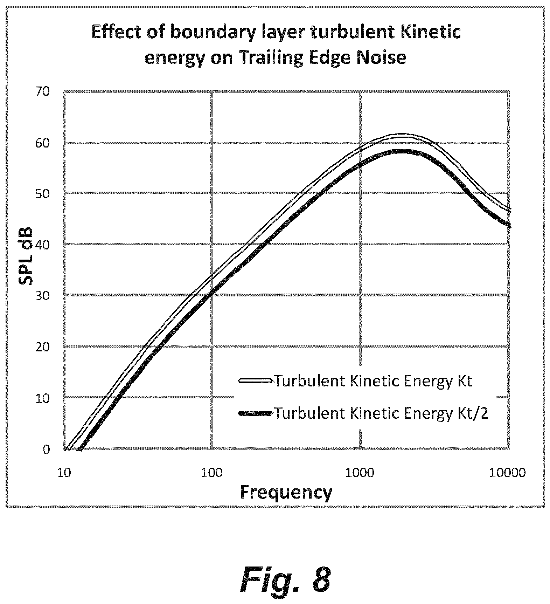

The potential noise-reducing effect of the trailing edge fluid injection can be seen with reference to Fig. 8. Fig. 8 shows a plot of the noise levels detected at the trailing edge of a wind turbine blade against the noise frequencies, for two different levels of turbulent kinetic energy of airflow over the blade. The plot is using a frequency-wave number based wall pressure spectrum formulation. The noise is measured as sound pressure levels (SPLs). The unit of the SPL is the decibel (dB).

The upper curve shown corresponds to a baseline turbulent kinetic energy level Kt, while the lower curve shows the result of a reduction in kinetic energy to Kt/2. Accordingly, once kinetic energy in the airflow is reduced, the noise levels decrease at all frequencies of interest. It can be seen that using fluid injection to partially reduce turbulent kinetic energy in the airflow can reduce detected noise levels by approximately 2-3 dB.

In a further aspect of the invention, the wind turbine blade may comprise fluid injection devices which are operable to inject fluid in an upstream direction, i.e. against the oncoming airflow, and/or where the direction of fluid injection from the device may be adjustable. By injecting fluid against the incident airflow, a more efficient absorption of the turbulent kinetic energy of the airflow is provided, resulting in a considerable reduction in the operating noise of the wind turbine blade.

In a further embodiment of the invention, the fluid injection device 80 may be adjustable, such that the direction of fluid injection can be controlled. In a first aspect, the direction of fluid injection may be variable from a substantially downstream direction (i.e. substantially in line with the mean flow direction over the profiled contour of the blade 10), to an upstream direction (i.e. substantially opposed to the mean flow direction over the profiled contour of the blade 10). Such variation of the injection direction allows for a greater control of the noise reducing characteristics of the blade 10, which can be balanced with the requirements for the aerodynamic performance of the blade 10.

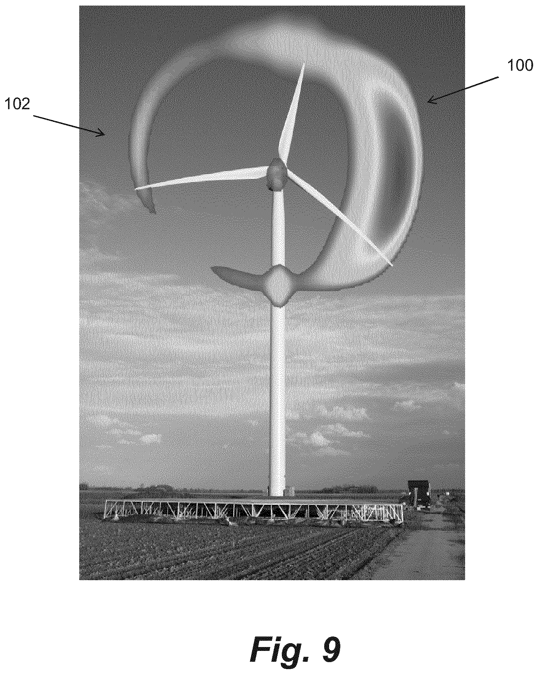

With reference to Fig. 9, an illustration of noise levels detected for a single wind turbine blade during operation of a standard three-bladed wind turbine blade is shown. The figure shown is from measurements performed by the Nationaal Lucht- en Ruimtevaartlaboratorium (NLR) of the Netherlands. The noise levels are measured with respect to an observer on the ground, and is an IEC standard of measuring noise and ensuring noise limits. As the wind turbine rotor blades rotate in a clockwise direction, it can be seen that the greatest intensity of noise generated during turbine operation (with respect to a ground-based observer) occurs when the wind turbine blade is on the downward path of rotation, indicated generally at 100. Conversely, minimal noise levels are detected during the upward portion of the rotational path, indicated generally at 102.

The main cause of high levels of noise emanating during down stroke moment of blade is the convective amplification together with noise source approach to observer. During upward path, essentially the noise source (with the trailing edge of the blade as the major source) is going away from observer - hence the perceived noise is less (the Doppler effect).

As the lifting properties of the blade 10 are of reduced importance during the downward path of the blade 10 when compared to the upward path, accordingly the type of fluid injection performed can be controlled to maximise the performance of the blade noise reduction features.

With reference to Figs. 10(a) and (b), a further embodiment of the invention is shown with regard to an enlarged cross-sectional view of the blade trailing edge 58 (in the example shown, the trailing edge 58 is part of a truncated blade profile, having a trailing edge surface 58a). In Figs. 10(a) and (b), the fluid injection device 80 shown comprises a directable fluid nozzle, which can be adjustably pivoted with respect to the surface of the blade 10.

In Fig. 10(a), the fluid injection device 80 is positioned such that the fluid injection 82 is in a downstream direction, substantially in line with the incident airflow over the blade 10, indicated by arrows 90. Accordingly, fluid is injected into the airflow 90 to reduce the turbulent kinetic energy of the airflow, and to provide a reduction in the operating noise of the blade 10.

In Fig. 10(b), the fluid injection device 80 is rotated such that the nozzle is directed away from the general trailing edge direction of the blade, and positioned such that the fluid injection 84 is in an upstream direction, substantially opposed to the incident airflow over the blade 10, in this case indicated by arrows 92. Accordingly, fluid is injected into the airflow 92 against the airflow direction, which may result in a change in the aerodynamic characteristics of the blade 10, as the airflow 92 meets resistance in the form of the fluid injection 84. This upstream injection of fluid 84 acts to significantly reduce the turbulent kinetic energy of airflow 92, providing a corresponding significant reduction in noise produced during operation of the blade 10, but may negatively impact on the lift performance of the blade 10 (due to the adjusted blade aerodynamic characteristics).

In a preferred implementation, the fluid injection device 80 is communicatively coupled with a controller which is operable to regulate the injection direction of the device 80. Accordingly, the fluid injection may be varied between a substantially downstream and a substantially upstream injection direction. This variation may be based on the current operating conditions of the wind turbine, e.g. a noise level detected for the turbine, a noise level detected for a blade, the detected wind speed at the turbine, a predicted wind speed at the turbine, etc.

For example in a high wind condition, the blade lifting characteristics may be of a reduced importance due to the increased wind power available, while noise reduction may be of increased importance due to the increased kinetic energy in the airflow about the blade. In such a case, the controller may be operable to adjust the injection direction of the nozzles of the fluid injection devices to point in a substantially upstream direction, to provide maximum noise reduction properties. If the wind speed subsequently drops, the controller may then re-direct the fluid injection devices to provide substantially downstream injection, resulting in a balance between noise reduction and minimal impact on blade lift.

In one preferred implementation, a controller may be operable to adjust the injection direction of the devices 80 based on the rotational position of the wind turbine blade. For example, referring to Fig. 9, the majority of the blade noise is generated during the downward path of the blade 10, but the lifting properties of the blade are not of maximum importance for this section - blade lift is more vital during the upward path of the blade. Accordingly, the controller is operable to rotate the devices 80 such that the fluid injection is provided in a substantially upstream direction during the downward portion of the rotational path of the blade 10, and is aligned in a substantially downstream direction during the upward portion of the rotational path of the blade 10. In this case, the maximum noise reduction properties of the fluid injection devices 80 are provided during that part of the blade rotation where the majority of blade noise is produced (i.e. section 100), while the devices are aligned to provide minimal impact on blade lift during the upward path of the blade 10 (where relatively less blade noise is produced, section 102).

It will be understood that the rotation of the fluid injection devices may be controlled such that the upstream injection 84 only occurs for a portion of the downward path of the rotational cycle, for example when the blade is in the rotational range of between 30-120 degrees with respect to the vertical axis of the wind turbine during the downward path of the blade, such that the upstream injection is concentrated at those points where maximum blade noise is generation (i.e. section 100).

In a further enhancement of the invention, it will be understood that the fluid injection devices 80 may be adjustable such that the direction of fluid injection can be varied between a first position wherein fluid is injected into the airflow about the blade, to a second position wherein fluid is directed onto the surface of the blade profile. By applying a fluid, e.g. water, onto the surface of the blade profiled contour, it is possible to reduce the skin friction drag of the blade surface, thereby reducing the overall blade drag. This provides further flexibility of operation and control of the blade performance, such that the adaptive control of the fluid injection at the blade can be used to maximise blade power output for the operating conditions experienced.

Preferably, the fluid injected using the devices 80 has a relatively high viscosity compared to the incident airflow. In a preferred embodiment, water is used as the injected fluid, but it will be understood that any suitable aerosol or liquid compositions may be employed. It will be understood that the fluid may be injected in any suitable form, e.g. a fine mist or spray, or a flow of droplets of any suitable size.

A reservoir of suitable fluid for injection may be provided in the blade itself, and/or the blade may comprise piping or tubing to conduct fluid from the wind turbine structure to the injection devices 80.

The fluid injection process may be controlled as part of a closed-loop control system, wherein the fluid injection characteristics may be varied dependent on the operating conditions of the wind turbine (e.g. wind speed at the turbine, detected noise levels at the turbine), to minimise the operating noise generated by the wind turbine blades.

For example, the blade may further comprise a pump mechanism and/or at least one controllable valve, such that the volume of fluid injected into the airflow can be regulated. The blade may also be operable to control the rate and/or pressure at which fluid is injected into the airflow. Furthermore, the fluid injection devices may be adjustable to control the characteristics of the actual fluid injection, e.g. the spray pattern, spray angle, drop size of the spray, etc. Accordingly, the characteristics of the fluid injection may be varied to provide the maximum noise reduction performance for the given operating conditions.

It will be understood that any suitable fluid injection device may be employed for the invention, e.g. a spray nozzle, an atomiser nozzle, a surface impingement nozzle, etc.

While the embodiment shown in Fig. 10 indicates that the fluid injection devices 80 are moveable in a hinged rotation, it will be understood that any suitable motion of the devices 80 may be used. Furthermore, it will be understood that in the case of a surface impingement nozzle being used as the fluid injection device, it may be sufficient to only move the impingement surface of such a nozzle to provide for the required directional adjustment of the resultant fluid injection stream.

It will be understood that different adjustments may be made to the embodiments illustrated. For example, any suitable projecting flow modulation device may be combined with the fluid injection devices, e.g. bristles. The use of bristles allows for the kinetic energy of the incident airflow to be converted to mechanical bending energy in the bristles, thereby reducing the generated trailing edge noise of the blade.

In a particular alternative embodiment, the individual serrations 74 may be replaced or combined with individual clusters of bristles.

Furthermore, it will be understood that while the serrations 74 illustrated herein are substantially planar, three-dimensional serrations may also be employed at the blade trailing edge to reduce scattering noise, i.e. serrations which may vary in depth as well as width.

It will be understood that the fluid injection devices, and/or the serrations, may be provided at the trailing edge of the blade, along the longitudinal length of the blade. Preferably, the devices and/or serrations are provided in the region of 40-98% of the length of the blade from the root end of the blade. In an alternative embodiment, the serrations are provided in the region of 60-95% of the length of the blade As the majority of the noise-generation of a wind turbine blade occurs towards in the region towards the outer sections of the blade (due to the relatively high wind speeds in effect at these outer sections), the noise reducing features will perform most effectively when located in these regions.

In a further enhancement of the invention, it will be understood that the serrations (or bristles) may be moveable relative to the trailing edge of the blade, preferably translationally moveable, in order to provide further control and adaptability of the noise reducing characteristics of the blade.

It will be understood that any features of the above embodiments may be interchangeable with the features of any other embodiment without departing from the scope of the invention.

The invention is not limited to the embodiments described herein, and may be modified or adapted without departing from the scope of the present invention as defined in the appended claims.

## Claims

1. A wind turbine blade for a rotor of a wind turbine having a substantially horizontal rotor shaft, the rotor comprising a hub, from which the wind turbine blade extends substantially in a radial direction when mounted to the hub, the wind turbine blade extending in a longitudinal direction parallel to a longitudinal axis and having a tip end and a root end,
the wind turbine blade further comprising a profiled contour including a pressure side and a suction side, as well as a leading edge and a trailing edge with a chord having a chord length extending therebetween, the profiled contour, when being impacted by an incident airflow, generating a lift,
wherein the wind turbine blade further comprises at least a first array of projecting flow modulation elements provided at the trailing edge of the contour, said flow modulation elements projecting in a direction substantially away from the leading edge of the contour, said elements operable to reduce noise generated by operation of the blade by modulation of the airflow at the trailing edge of the contour,
**characterised in that**
the wind turbine blade further comprises at least one fluid injection device, the fluid injection device operable to inject fluid into the airflow over the blade contour to reduce the turbulent kinetic energy of airflow at the trailing edge of the profiled contour, to further reduce the noise generated by operation of the blade, wherein the fluid injection device comprises a nozzle operable to inject fluid in the form of a spray or droplets into the airflow over the blade contour.

2. The blade of claim 1, wherein the fluid is selected to have a higher viscosity than the incident airflow.

3. The blade of any one of claims 1-2, wherein said at least a first array of projecting flow modulation elements extends in a longitudinal direction along at least a portion of the length of the wind turbine blade between said root end and said tip end.

4. The blade of any one of claims 1-3, wherein said projecting elements are selected from at least one of the following: serrations, bristles, clusters of bristles.

5. The blade of any preceding claim, wherein said at least one fluid injection device is provided at said trailing edge between adjacent projecting elements.

6. The blade of any preceding claim, wherein at least one fluid injection device is provided adjacent said trailing edge, to inject fluid into the airflow about the profiled contour at a location upstream of said trailing edge.

7. The blade of claim 6, wherein said at least one fluid injection device is positioned at a location spaced from the trailing edge, approximately 5-10% of the chordal length from said trailing edge.

8. The blade of any preceding claim, wherein said at least one fluid injection device is operable to inject fluid into the airflow at an angle of approximately 145-170 degrees to the chord of the profiled contour of the blade, taken from the leading edge of the blade.

9. The blade of any preceding claim, wherein said profiled contour comprises a substantially blunt trailing edge, wherein said at least a first array of projecting flow modulation elements are provided at the pressure side of said blunt trailing edge, and wherein said at least one fluid injection device is provided at the suction side of said blunt trailing edge.

10. The blade of any preceding claim, wherein said at least one fluid injection device is moveable to provide an adjustable fluid injection direction.

11. The blade of claim 10, wherein the angle of fluid injection is variable from a substantially downstream direction to a substantially upstream direction.

12. The blade of any preceding claim, wherein the blade comprises a fluid communication system operable to convey a fluid from a fluid reservoir to said at least one fluid injection device.

13. The blade of claim 12, wherein the fluid communication system comprises at least one valve operable to regulate the flow of fluid to the said at least one fluid injection device.

14. A wind turbine having at least one wind turbine blade as claimed in any one of claims 1-13.

## Patentansprüche

1. Windkraftanlagenflügel für einen Rotor einer Windkraftanlage mit einer im Wesentlichen horizontalen Rotorwelle, wobei der Rotor eine Nabe umfasst, von der sich der Windkraftanlagenflügel im Wesentlichen in einer Radialrichtung erstreckt, wenn er an der Nabe angebracht ist, wobei sich der Windkraftanlagenflügel in einer Längsrichtung parallel zu einer Längsachse erstreckt und ein Spitzenende und ein Wurzelende aufweist,
wobei der Windkraftanlagenflügel weiter eine Profilkontur umfasst, die eine Druckseite und eine Saugseite sowie eine Eintrittskante und eine Austrittskante umfasst, wobei sich eine eine Sehnenlänge aufweisende Sehne dazwischen erstreckt, wobei die Profilkontur einen Auftrieb erzeugt, wenn ein einströmender Luftstrom darauf auftrifft,
wobei der Windkraftanlagenflügel weiter mindestens eine erste Anordnung von an der Austrittskante der Kontur bereitgestellten vorstehenden Strömungsmodulationselementen umfasst, wobei die Strömungsmodulationselemente in einer Richtung im Wesentlichen von der Eintrittskante der Kontur weg vorstehen, wobei die Elemente wirksam sind, um durch Modulation des Luftstroms an der Austrittskante der Kontur durch den Betrieb der Flügel erzeugten Lärm zu verringern, **dadurch gekennzeichnet, dass**
der Windkraftanlagenflügel weiter mindestens eine Fluideinspritzvorrichtung umfasst, wobei die Fluideinspritzvorrichtung wirksam ist, um Fluid in den Luftstrom über die Flügelkontur einzuspritzen, um die turbulente kinetische Energie des Luftstroms an der Austrittskante der Profilkontur zu verringern, um den durch den Betrieb des Flügels erzeugten Lärm weiter zu verringern, wobei die Fluideinspritzvorrichtung eine Düse umfasst, die wirksam ist, um Fluid in Form eines Sprühnebels oder Tröpfchen in den Luftstrom über die Flügelkontur einzuspritzen.

2. Flügel nach Anspruch 1, wobei das Fluid ausgewählt ist, um eine höhere Viskosität aufzuweisen als der einströmende Luftstrom.

3. Flügel nach einem der Ansprüche 1-2, wobei sich die mindestens erste Anordnung von vorstehenden Strömungsmodulationselementen in einer Längsrichtung entlang mindestens einem Abschnitt der Länge des Windkraftanlagenflügels zwischen dem Wurzelende und dem Spitzenende erstreckt.

4. Flügel nach einem der Ansprüche 1-3, wobei die vorstehenden Elemente aus mindestens einem der Folgenden ausgewählt sind: Rippen, Borsten, Büschel von Borsten.

5. Flügel nach einem der vorangehenden Ansprüche, wobei die mindestens eine Fluideinspritzvorrichtung an der Austrittskante zwischen benachbarten vorstehenden Elementen bereitgestellt ist.

6. Flügel nach einem der vorangehenden Ansprüche, wobei mindestens eine Fluideinspritzvorrichtung der Austrittskante benachbart bereitgestellt ist, um an einem Ort stromaufwärts der Austrittskante Fluid in den Luftstrom um die Profilkontur einzuspritzen.

7. Flügel nach Anspruch 6, wobei die mindestens eine Fluideinspritzvorrichtung an einem um ungefähr 5-10 % der Sehnenlänge von der Austrittskante beabstandeten Ort positioniert ist.

8. Flügel nach einem der vorangehenden Ansprüche, wobei die mindestens eine Fluideinspritzvorrichtung wirksam ist, um Fluid unter einem Winkel, ausgehend von der Eintrittskante des Flügels, von ungefähr 145-170 Grad zu der Sehne der Profilkontur des Flügels in den Luftstrom einzuspritzen.

9. Flügel nach einem der vorangehenden Ansprüche, wobei die Profilkontur eine im Wesentlichen stumpfe Austrittskante umfasst, wobei die mindestens eine erste Anordnung von vorstehenden Strömungsmodulationselementen an der Druckseite der stumpfen Austrittskante bereitgestellt ist und wobei die mindestens eine Fluideinspritzvorrichtung an der Saugseite der stumpfen Austrittskante bereitgestellt ist.

10. Flügel nach einem der vorangehenden Ansprüche, wobei die mindestens eine Fluideinspritzvorrichtung bewegbar ist, um eine verstellbare Fluideinspritzrichtung bereitzustellen.

11. Flügel nach Anspruch 10, wobei der Winkel der Fluideinspritzung von einer im Wesentlichen stromabwärtigen Richtung zu einer im Wesentlichen stromaufwärtigen Richtung variabel ist.

12. Flügel nach einem der vorangehenden Ansprüche, wobei der Flügel ein Fluidübertragungssystem umfasst, das wirksam ist, um ein Fluid aus einem Fluidbehälter zu der mindestens einen Fluideinspritzvorrichtung zu fördern.

13. Flügel nach Anspruch 12, wobei das Fluidübertragungssystem mindestens ein Ventil umfasst, das wirksam ist, um den Strom von Fluid zu der mindestens einen Fluideinspritzvorrichtung zu regulieren.

14. Windkraftanlage, die mindestens einen Windkraftanlagenflügel nach einem der Ansprüche 1-13 aufweist.

## Revendications

1. Pale d'éolienne pour un rotor d'une éolienne ayant un arbre de rotor sensiblement horizontal, le rotor comportant un moyeu, en provenance duquel la pale d'éolienne s'étend sensiblement dans une direction radiale quand elle est montée sur le moyeu, la pale d'éolienne s'étendant dans une direction longitudinale parallèle par rapport à un axe longitudinal et ayant une extrémité de bout et une extrémité de pied,
la pale d'éolienne comportant par ailleurs un contour profilé comprenant un côté en pression et un côté en dépression, ainsi qu'un bord d'attaque et un bord de fuite avec une corde ayant une longueur de corde s'étendant entre eux, le contour profilé, quand il subit un impact par un écoulement d'air incident, générant une portée,
dans laquelle la pale d'éolienne comporte par ailleurs au moins un premier réseau d'éléments de modulation d'écoulement en saillie mis en oeuvre au niveau du bord de fuite du contour, lesdits éléments de modulation d'écoulement faisant saillie dans une direction allant sensiblement à l'opposé du bord d'attaque du contour, lesdits éléments servant à réduire le bruit généré par le fonctionnement de la pale par la modulation de l'écoulement d'air au niveau du bord de fuite du contour, **caractérisé en ce que**
la pale d'éolienne comporte par ailleurs au moins un dispositif d'injection de fluide, le dispositif d'injection de fluide servant à injecter du fluide dans l'écoulement d'air sur le contour de la pale pour réduire l'énergie cinétique turbulente de l'écoulement d'air au niveau du bord de fuite du contour profilé, pour réduire plus encore le bruit généré par le fonctionnement de la pale, dans laquelle le dispositif d'injection de fluide comporte une buse servant à injecter du fluide sous la forme d'une pulvérisation ou des gouttelettes dans l'écoulement d'air sur le contour de la pale.

2. Pale selon la revendication 1, dans laquelle le fluide est sélectionné pour avoir une viscosité supérieure par rapport à l'écoulement d'air incident.

3. Pale selon l'une quelconque des revendications 1 à 2, dans laquelle ledit au moins un premier réseau d'éléments de modulation d'écoulement en saillie s'étend dans une direction longitudinale le long d'au moins une partie de la longueur de la pale d'éolienne entre ladite extrémité de pied et ladite extrémité de bout.

4. Pale selon l'une quelconque des revendications 1 à 3, dans laquelle lesdits éléments en saillie sont sélectionnés parmi au moins l'un des éléments suivants : des dentelures, des poils, des touffes de poils.

5. Pale selon l'une quelconque des revendications précédentes, dans laquelle ledit au moins un dispositif d'injection de fluide est mis en oeuvre au niveau dudit bord de fuite entre des éléments en saillie adjacents.

6. Pale selon l'une quelconque des revendications précédentes, dans laquelle au moins un dispositif d'injection de fluide est mis en oeuvre de manière adjacente par rapport audit bord de fuite, pour injecter du fluide dans l'écoulement d'air autour du contour profilé au niveau d'un emplacement en amont dudit bord de fuite.

7. Pale selon la revendication 6, dans laquelle ledit au moins un dispositif d'injection de fluide est positionné au niveau d'un emplacement espacé par rapport au bord de fuite, sur approximativement de 5 à 10 % de la longueur de corde par rapport audit bord de fuite.

8. Pale selon l'une quelconque des revendications précédentes, dans laquelle ledit au moins un dispositif d'injection de fluide sert à injecter du fluide dans l'écoulement d'air selon un angle d'approximativement 145 à 170 degrés par rapport à la corde du contour profilé de la pale, mesuré depuis le bord d'attaque de la pale.

9. Pale selon l'une quelconque des revendications précédentes, dans laquelle ledit contour profilé comporte un bord de fuite sensiblement émoussé, dans laquelle ledit au moins un premier réseau d'éléments de modulation d'écoulement en saillie est mis en oeuvre au niveau du côté en pression dudit bord de fuite émoussé, et dans laquelle ledit au moins un dispositif d'injection de fluide est mis en oeuvre au niveau du côté en dépression dudit bord de fuite émoussé.

10. Pale selon l'une quelconque des revendications précédentes, dans laquelle ledit au moins un dispositif d'injection de fluide est mobile pour fournir une direction d'injection de fluide ajustable.

11. Pale selon la revendication 10, dans laquelle l'angle d'injection de fluide est variable d'une direction sensiblement en aval à une direction sensiblement en amont.

12. Pale selon l'une quelconque des revendications précédentes, dans laquelle la pale comporte un système de communication de fluide servant à transporter un fluide depuis un réservoir de fluide jusqu'audit au moins un dispositif d'injection de fluide.

13. Pale selon la revendication 12, dans laquelle le système de communication de fluide comporte au moins une vanne servant à réguler l'écoulement du fluide jusqu'audit au moins un dispositif d'injection de fluide.

14. Éolienne ayant au moins une pale d'éolienne selon l'une quelconque des revendications 1 à 13.
